# EUROPEAN PATENT APPLICATION

(11) **EP 4 751 970 A1**
(43) Date of publication of application: **03.06.2026**
(21) Application number: 25218532.7
(22) Date of filing: 26.11.2025
(51) Int. Cl.: B60K 35/22, B60K 35/28, B60K 35/29, B60K 35/81

(54) **DISPLAY CONTROL DEVICE, DISPLAY CONTROL METHOD, AND COMPUTER-READABLE MEDIUM STORING DISPLAY CONTROL PROGRAM**

(30) Priority: 28.11.2024 JP 2024207744
(71) Applicant: Toyota Jidosha Kabushiki Kaisha, Toyota-shi, Aichi-ken 471-8571 (JP)
(72) Inventor: Tsujino, Miki, TOYOTA-SHI, AICHI-KEN, 471-8571 (JP); Van der Walt, MW, CHUO-KU, TOKYO, 103-0022 (JP); Klarowski, Piotr, CHUO-KU, TOKYO, 103-0022 (JP); O' Shanahan, Lorcan, CHUO-KU, TOKYO, 103-0022 (JP)
(74) Representative: Cabinet Beau de Loménie

(57) **Abstract**

A display control device including: a display control section that, in accordance with an operating state of a driving assistance function installed in a vehicle, performs control to change and display, at a display section, a display mode of partial images of images of boundary lines, the partial images located in positions determined as positions in the vicinity of the vehicle out of the images of boundary lines of a driving lane that is a lane in which the vehicle is driving.

## Description

### BACKGROUND

### Technical Field

This disclosure relates to a display control device, a display control method, and a computer-readable medium storing a display control program.

### Related Art

Japanese Patent Application Laid-open (JP-A) No. 2022-041285, discloses a technology that changes and displays background information of area information relating to a vehicle, when a driving mode of the vehicle is an autonomous driving mode and a driving operation intervention by an occupant is detected.

Vehicles in recent years sometimes have a driving assistance function installed that assists the driving of the vehicle. In vehicles having a driving assistance function installed, it is preferred that the occupant be able to easily grasp the operating state of the driving assistance function. With the technology disclosed in JP-A No. 2022-041285, the occupant can grasp that a driving operation intervention by the occupant is detected when the driving mode of the vehicle is the autonomous driving mode, but there is room for improvement in terms of grasping the operating state of the driving assistance function.

### SUMMARY

The present disclosure provides a display control device, a display control method, and a computer-readable medium storing a display control program with which an occupant of a vehicle can easily grasp the operating state of a driving assistance function installed in the vehicle.

A first aspect of the present disclosure is a display control device including: a display control section that, in accordance with an operating state of a driving assistance function installed in a vehicle, performs control to change and display, at a display section, a display mode of partial images of images of boundary lines, the partial images located in positions determined as positions in the vicinity of the vehicle out of the images of boundary lines of a driving lane that is a lane in which the vehicle is driving.

According to the display control device of the first aspect, the display mode of the partial images located in positions determined as positions in the vicinity of the vehicle out of the images of the boundary lines of the driving lane that is the lane in which the vehicle is driving is displayed differently in accordance with the operating state of the driving assistance function installed in the vehicle. Because of this, the occupant of the vehicle may easily grasp the operating state of the driving assistance function installed in the vehicle.

In a second aspect of the present disclosure, in the first aspect, the display control section may perform, as the control to change and display the display mode, control to change and display colors of the partial images.

According to the display control device of the second aspect, the color of the partial images is displayed differently. Because of this, the occupant of the vehicle may more easily grasp the operating state of the driving assistance function installed in the vehicle.

In a third aspect of the present disclosure, in the second aspect, the display control section may perform control to display regions corresponding to the partial images, in a color according to the operating mode.

According to the display control device of the third aspect, the regions corresponding to the partial images are colored in a color according to the operating state. Because of this, the occupant of the vehicle may easily grasp the operating state of the driving assistance function installed in the vehicle regardless of the types of the boundary lines.

In a fourth aspect of the present disclosure, in the second or third aspect, the display control section may: perform control to change and display the colors of the partial images in accordance with an operating state of a first driving assistance function, perform control to change and display a color of an image of the driving lane in accordance with an operating state of a second driving assistance function, and perform control to display the partial images and the image of the driving lane in the same color when the first driving assistance function and the second driving assistance function are active.

According to the display control device of the fourth aspect, the partial images and the image of the driving lane are displayed in the same color when the first driving assistance function and the second driving assistance function are active. Because of this, the occupant of the vehicle may easily grasp the operating states of the plurality of driving assistance functions installed in the vehicle.

In a fifth aspect of the present disclosure, in the second or third aspect, may further include a perception section that perceives the boundary lines, wherein the display control section may perform control to change and display a display mode of the boundary lines in accordance with the types of the boundary lines perceived by the perception section, and may perform control to change and display the color of the partial images in accordance with the operating state.

According to the display control device of the fifth aspect, the display mode of the boundary lines is displayed differently in accordance with the types of the boundary lines and the color of the partial images is displayed differently in accordance with the operating state. Because of this, the occupant of the vehicle may easily grasp the types of the boundary lines and the operating state of the driving assistance function installed in the vehicle.

In a sixth aspect of the present disclosure, in any one of the first to fifth aspects, the display control section may perform control to change and display a display mode of the partial image of the boundary line that borders an adjacent lane adjacent to the driving lane and to which the vehicle can change lanes, out of the boundary lines positioned at left and right sides of the vehicle.

According to the display control device of the sixth aspect, the display mode of the partial image of the boundary line that borders an adjacent lane adjacent to the driving lane and to which the vehicle can change lanes out of the boundary lines positioned on the left and right sides of the vehicle is displayed differently. Because of this, the occupant of the vehicle may easily grasp whether it is possible to change lanes and the operating state of the driving assistance function installed in the vehicle.

A seventh aspect of the present disclosure is a display control method in which a computer executes a process that, in accordance with an operating state of a driving assistance function installed in a vehicle, performs control to change and display, at a display section, a display mode of partial images of images of boundary lines, the partial images located in positions determined as positions in the vicinity of the vehicle out of the images of boundary lines of a driving lane that is a lane in which the vehicle is driving.

An eighth aspect of the present disclosure is a computer-readable medium storing a display control program for causing a computer to execute a process that, in accordance with an operating state of a driving assistance function installed in a vehicle, performs control to change and display, at a display section, a display mode of partial images of images of boundary lines, the partial images located in positions determined as positions in the vicinity of the vehicle out of the images of boundary lines of a driving lane that is a lane in which the vehicle is driving.

According to the above aspects, the display control device, the display control method, and the computer-readable medium storing the display control program of the present disclosure may allow the occupant of a vehicle to easily grasp the operating state of a driving assistance function installed in the vehicle.

### BRIEF DESCRIPTION OF THE DRAWINGS

Exemplary embodiments will be described in detail based on the following figures, wherein:
FIG. 1 is a drawing schematically showing the front portion of a vehicle cabin as viewed from the rear side of the vehicle;
FIG. 2 is a block diagram showing an example of hardware configurations of a display control device;
FIG. 3 is a block diagram showing an example of functional configurations of the display control device;
FIG. 4 is a drawing showing an example of a display screen;
FIG. 5 is a drawing showing an example of a display screen;
FIG. 6 is a drawing showing an example of a display screen;
FIG. 7 is a drawing showing an example of a display screen;
FIG. 8 is a drawing showing an example of a display screen;
FIG. 9 is a drawing showing an example of a display screen;
FIG. 10 is a drawing showing an example of a display screen;
FIG. 11 is a drawing showing an example of a display screen; and
FIG. 12 is a flowchart showing an example of a display control process.

### DETAILED DESCRIPTION

Exemplary embodiments of the present disclosure will now be described in detail below with reference to the drawings.

Driving assistance functions with which a vehicle 12 of this embodiment is equipped include a variety of driving assistance functions, but in this embodiment the following driving assistance functions will be described as an example.
(1) Radar Cruise Control (Adaptive Cruise Control (ACC) / Dynamic Radar Cruise Control (DRCC): This function is a driving assistance function that uses a camera and a radar (a monocular camera and a mm Wave radar) included in a sensor group 42 described below to perceive a preceding vehicle and assists in following the preceding vehicle while maintaining a following distance based on vehicle speed.
(2) Lane Tracing Assist (LTA): This function assists with some of the steering force needed to keep the vehicle in the center of the same lane. An example of a scenario when this is used is when driving on a highway.

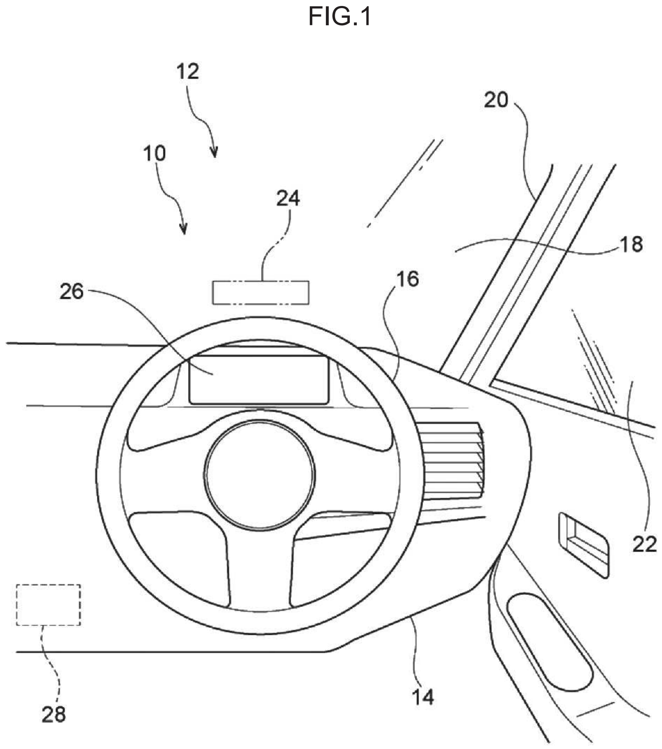

First, configurations of the vehicle 12 to which a driving control device 10 pertaining to this embodiment has been applied will be described with reference to FIG. 1. As shown in FIG. 1, in the front portion of the cabin in the vehicle 12, an instrument panel 14 is provided. The instrument panel 14 extends in the vehicle width direction, and a steering wheel 16 is provided on the vehicle right side of the instrument panel 14. That is, in this embodiment, as an example, the vehicle 12 is a right-hand-drive vehicle where the steering wheel 16 is provided on the right side, and the driver's seat is set on the vehicle right side.

On the front end portion of the instrument panel 14, a windshield glass 18 is provided. The windshield glass 18 extends in the vehicle up and down direction and the vehicle width direction and separates the cabin interior from the cabin exterior.

The vehicle right-side end portion of the windshield glass 18 is secured to a front pillar 20 on the vehicle right side. The front pillar 20 extends in the vehicle up and down direction, and the windshield glass 18 is secured to the vehicle width direction inner end portion of the front pillar 20. Furthermore, the front end portion of a front side glass 22 is secured to the vehicle width direction outer end portion of the front pillar 20. It will be noted that the vehicle left-side end portion of the windshield glass 18 is secured to a front pillar on the left side of the vehicle (not shown in the drawings).

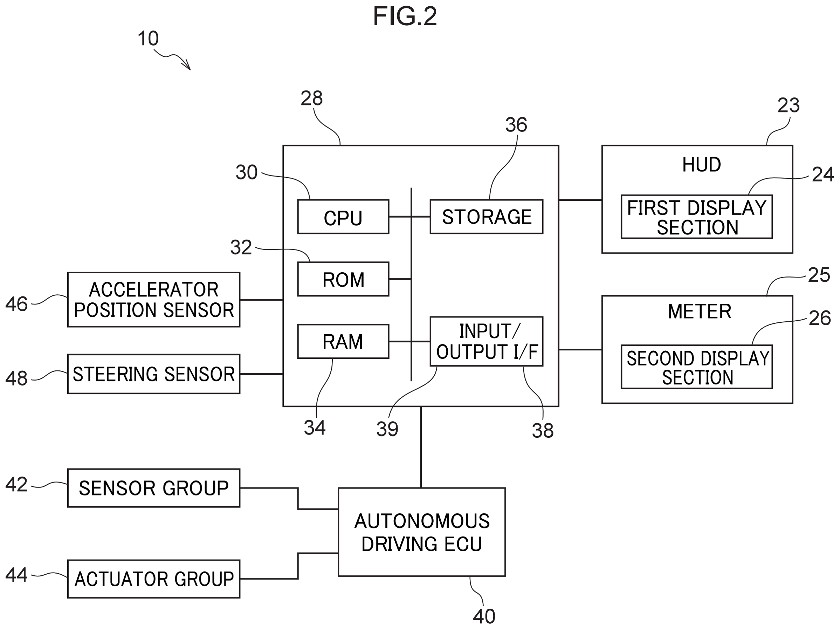

On the windshield glass 18, a first display section 24 is provided. The first display section 24 is configured by a projection surface projected by a head-up display device 23 (see FIG. 2, where it is indicated as "HUD"). Specifically, the head-up display device 23 is provided on the vehicle forward side of the instrument panel 14 and is configured so that video is projected from the head-up display device 23 toward the first display section 24 on the windshield glass 18.

On the vehicle lower side of the first display section 24, a second display section 26 is provided. The second display section 26 is a display section displayed at a meter 25 (see FIG. 2), and the meter 25 is positioned on the vehicle forward side of the driver's seat in the instrument panel 14. The first display section 24 and the second display section 26 are provided in positions where the driver can see them. The second display section 26 is an example of a display device pertaining to the technology of the present disclosure.

Hardware configurations of the display control device 10 will be described with reference to FIG. 2. The display control device 10 is a device that performs control to display conditions in the area around the vehicle on the second display section 26. As shown in FIG. 2, the display control device 10 includes an electronic control section (ECU) 28. The ECU 28 is an example of a computer.

The ECU 28 includes a central processing section (CPU) 30, a read-only memory (ROM) 32, a random-access memory (RAM) 34, a storage 36, and an input/output interface (I/F) 38. The CPU 30, the ROM 32, the RAM 34, the storage 36, and the input/output I/F 38 are communicably interconnected via an internal bus 39.

The CPU 30 is a central arithmetic processing section, executes various types of programs, and controls each part. That is, the CPU 30 reads programs from the ROM 32 or the storage 36 and executes the programs using the RAM 34 as a workspace. Furthermore, the CPU 30 controls each of the above configurations and performs various types of arithmetic processing in accordance with the programs recorded in the ROM 32 or the storage 36.

The ROM 32 stores various types of programs and various types of data. The RAM 34 temporarily stores programs or data as a workspace. The storage 36 is configured by a hard disk drive (HDD), a solid-state drive (SSD), or flash memory and is a non-transitory recording medium that stores various types of programs, including an operating system, and various types of data. In this embodiment, the ROM 32 or the storage 36 stores, for example, a display control program for performing a display control process. Furthermore, various types of input/output devices are connected to the input/output I/F 38.

The ECU 28 is electrically connected to an autonomous driving ECU 40. The autonomous driving ECU 40, like the ECU 28, includes a CPU, a ROM, a RAM, a storage, and an input/output I/F that are not shown in the drawings.

Connected to the autonomous driving ECU 40 are a sensor group 42 that detects the current conditions of the vehicle 12 and an actuator group 44 that controls the driving of the vehicle 12. The sensor group 42 includes various types of sensors such as cameras, a radar, a lidar (Light Detection and Ranging or Laser Imaging Detection and Ranging), and a global positioning system (GPS) sensor. The cameras captures images of the area around the vehicle 12. The radar uses radio waves to detect distances to and directions of objects around the vehicle 12. The lidar uses laser light to detect distances to and directions of objects around the vehicle 12. The GPS sensor detects the current position of the vehicle 12. In addition to these, the sensor group 42 may include a sensor that detects the state of the occupant. For example, the sensor group 42 may include a biometric sensor that detects the occupant's heart rate and level of alertness.

The actuator group 44 includes an acceleration/deceleration actuator that regulates acceleration/deceleration of the vehicle 12 and a steering actuator that drives a steering device of the vehicle 12. The autonomous driving ECU 40 autonomously drives the vehicle 12 by controlling the operation of the actuator group 44 in accordance with the current conditions of the vehicle 12 detected by the sensor group 42. It will be noted that a storage section of the autonomous driving ECU 40 stores a planned route representing a route the vehicle 12 is planning to drive, and the autonomous driving ECU 40 drives the vehicle 12 along the planned route stored in the storage section.

Connected to the ECU 28 are an accelerator position sensor 46 and a steering sensor 48. The accelerator position sensor 46 is a sensor that detects the position of an accelerator pedal (not shown in the drawings) provided in front of the lower portion of the driver's seat. Furthermore, the steering sensor 48 is a sensor that detects loads applied to the steering wheel 16 by the occupant.

In this connection, the vehicle 12 pertaining to this embodiment has a plurality of driving assistance functions installed. In this embodiment, as an example of a first driving assistance function, a lane centering assist function that helps keep the vehicle 12 centered within its lane is installed in the vehicle 12. Furthermore, in this embodiment, as an example of a second driving assistance function, a following distance control function that maintains a following distance between the vehicle 12 and a preceding vehicle driving in front of the vehicle 12 so as to keep the following distance at a set distance is installed in the vehicle 12. The following distance control function and the lane centering assist function are switchable on and off by buttons provided on the vehicle right side of the instrument panel 14 or on the steering wheel 16 for example. The following distance control function corresponds to the aforementioned radar cruise control, and the lane centering assist function corresponds to the aforementioned lane tracing assist.

These driving assistance functions are realized by the autonomous driving ECU 40. In this embodiment, the autonomous driving ECU 40 outputs the operating states of the driving assistance functions to the ECU 28 when there is a change in the operating state of each of the plurality of driving assistance functions. The ECU 28 performs control to identifiably display the operating state of each of the plurality of driving assistance functions.

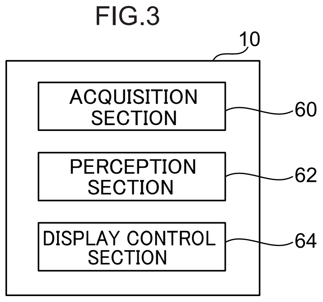

Functional configurations of the display control device 10 pertaining to this embodiment will now be described with reference to FIG. 3. As shown in FIG. 3, the display control device 10 includes an acquisition section 60, a perception section 62, and a display control section 64. The CPU 30 functions as the acquisition section 60, the perception section 62, and the display control section 64 by executing programs stored in the ROM 32 or the storage 36.

The acquisition section 60 acquires the operating states of the driving assistance functions output from the autonomous driving ECU 40. The perception section 62 perceives boundary lines of a driving lane that is the lane in which the vehicle 12 is driving by performing image analysis processing on optical images captured by the cameras of the sensor group 42. In this embodiment, the perception section 62 perceives the types of the boundary lines positioned on left and right sides of the vehicle 12. Examples of the types of the boundary lines include solid white lines, dashed white lines, solid yellow lines, and dashed yellow lines.

The display control section 64 performs control to change, in accordance with the operating state of the lane centering assist function installed in the vehicle 12, and display at the second display section 26 a display mode of partial images located in positions determined as positions in the vicinity of the vehicle 12 out of images of the boundary lines of the driving lane. In this embodiment, the display control section 64 performs, as the control to change and display the display mode, control to change and display the color of the partial images. The "operating state" here includes an OFF state in which the function is switched OFF by the button (i.e., a state in which the function is not active) and an ON state in which the function is switched ON by the button (i.e., a state in which the function is active).

Furthermore, the display control section 64 performs control to change, in accordance with the operating state of the following distance control function, and display at the second display section 26 the color of the image of the driving lane. Moreover, the display control section 64 performs control to display the image of the driving lane and the partial images of the boundary lines in the same color when the following distance control function and the lane centering assist function are active.

Furthermore, the display control section 64 performs control to change and display at the second display section 26 the display mode of the boundary lines in accordance with the types of the boundary lines perceived by the perception section 62 and change and display at the second display section 26 the color of the partial images of the boundary lines in accordance with the operating state of the lane centering assist function. In this case, for example, the display control section 64 performs, as the control to change and display the display mode of the boundary lines, control to display the boundary lines as solid lines or dashed lines to match the types of the boundary lines perceived by the perception section 62.

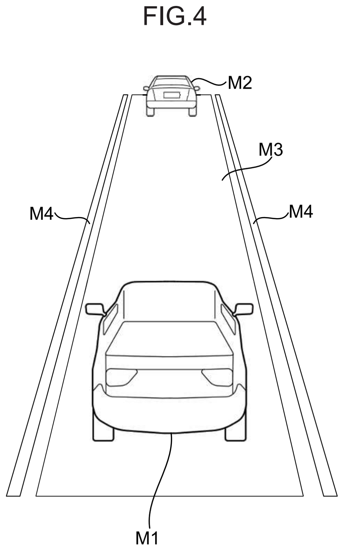

Specific examples of screens displayed at the second display section 26 serving as a display section by the control by the display control section 64 will now be described with reference to FIG. 4 to FIG. 11.

FIG. 4 shows an example of a display screen when the following distance control function and the lane centering assist function are not active and the types of boundary lines positioned at the left and right sides of the vehicle 12 are solid white lines. As shown in FIG. 4, in this embodiment, a host vehicle image M1 modeled after the vehicle 12 that is a host vehicle, a preceding vehicle image M2 modeled after a preceding vehicle driving in front of the vehicle 12, a road surface image M3 modeled after the road surface of the driving lane, and boundary line images M4 modeled after the boundary lines on the left and right sides of the driving lane are displayed at the second display section 26.

The road surface image M3 is displayed in the shape of a strip heading from the lower portion to the upper portion of the second display section 26 in the left and right direction center of the second display section 26. Furthermore, the road surface image M3 is displayed such that its width gradually narrows heading from the lower portion to the upper portion of the second display section 26. The boundary line images M4 are displayed at the left and right sides of the road surface image M3. The boundary line images M4 are also displayed in the shape of strips heading from the lower portion to the upper portion of the second display section 26. Furthermore, the boundary line images M4 are also displayed such that their widths gradually narrow heading from the lower portion to the upper portion of the second display section 26. Furthermore, the widths of the boundary line images M4 are displayed narrower than the width of the road surface image M3. The host vehicle image M1 is displayed superimposed on the road surface image M3 in the lower portion of the second display section 26. The preceding vehicle image M2 is displayed superimposed on the road surface image M3 in a position above the host vehicle image M1 and in a position according to the following distance between the vehicle 12 and the preceding vehicle.

The display control section 64 performs control to color and display the road surface image M3 and the boundary line images M4 in a first color (e.g., gray) when the following distance control function and the lane centering assist function are not active. Furthermore, the display control section 64 performs control to display the boundary lines represented by the boundary line images M4 as solid lines in accordance with the types of the boundary lines perceived by the perception section 62.

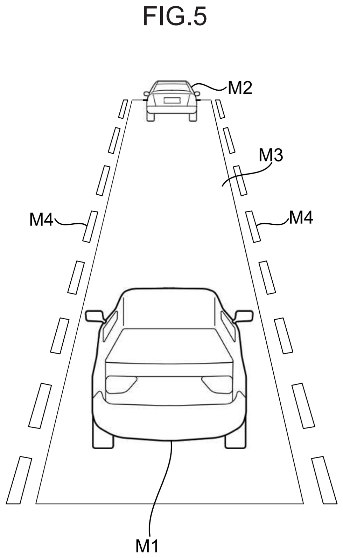

FIG. 5 shows an example of a display screen when the following distance control function and the lane centering assist function are not active and the types of the boundary lines positioned at the left and right sides of the vehicle 12 are dashed white lines. The display control section 64 performs control to color and display the road surface image M3 and the boundary line images M4 in the first color when the following distance control function and the lane centering assist function are not active. Furthermore, the display control section 64 performs control to display the boundary lines represented by the boundary line images M4 as dashed lines in accordance with the types of the boundary lines perceived by the perception section 62.

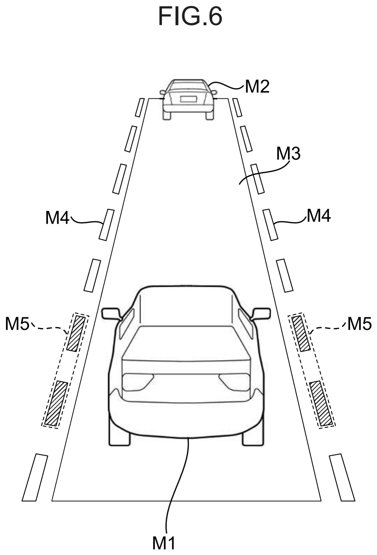

FIG. 6 shows an example of a display screen when the lane centering assist function is active, the following distance control function is not active, and the types of the boundary lines positioned on the left and right sides of the vehicle 12 are dashed white lines. The display control section 64 performs control to color and display the boundary line images M4 in the first color and to color and display partial images M5 located in positions determined as positions in the vicinity of the vehicle 12 out of the boundary line images M4 in a second color (e.g., green) when the lane centering assist function is active. It will be noted that the display control section 64 may perform control to display the partial image M5 located at the left side and the partial image M5 located on the right side in different colors. Furthermore, the display control section 64 may change the display mode of the partial images M5 by, for example, causing the partial images M5 to blink on and off, rather than coloring the partial images M5 in the second color when the lane centering assist function is active. For the second color, for example, a color distinguishable from the boundary lines that are actually present is used.

This embodiment describes, as an example, a case where positions that are set as the positions of the boundary lines positioned at the left and right sides of the vehicle 12, and are within the range of the up and down direction coordinates of the host vehicle image M1 corresponding to the vehicle 12 in the screen, are applied as the positions in the vicinity of the vehicle 12. It will be noted that, for example, positions that are set as the positions of the boundary lines positioned at the left and right sides of the vehicle 12, and are within the range of a preset distance from the host vehicle image M1 corresponding to the vehicle 12 in the screen, may also be applied as the positions in the vicinity of the vehicle 12.

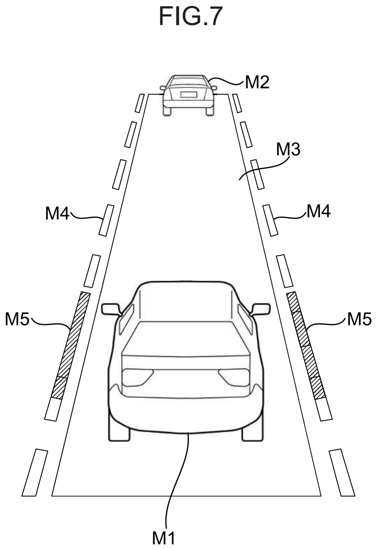

Furthermore, as shown in FIG. 7, the display control section 64 may perform, as the control to change and display the display mode of the partial images M5, control to color and display regions corresponding to the partial images M5 in a color according to the operating state of the lane centering assist function. The regions corresponding to the partial images M5 are regions within sections of the boundary line images M4 that include the partial images M5. FIG. 7, like FIG. 6, shows an example where the lane centering assist function is active, the following distance control function is not active, and the types of the boundary lines positioned on the left and right sides of the vehicle 12 are dashed white lines. In this example, when the lane centering assist function is active, the sections of the partial images M5 are colored in the second color regardless of whether the boundary lines are dashed lines or solid lines.

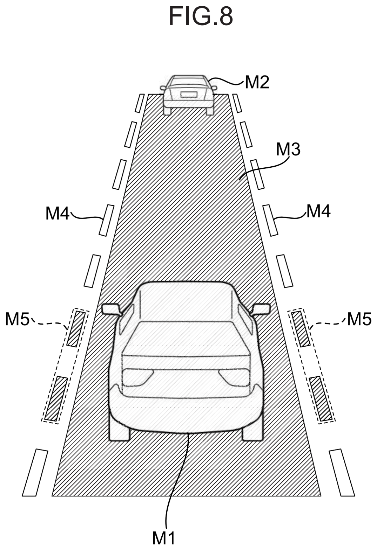

FIG. 8 shows an example of a display screen when the following distance control function and the lane centering assist function are active, and the types of the boundary lines positioned at the left and right sides of the vehicle 12 are dashed white lines. The display control section 64 performs control to color and display the road surface image M3 in the second color when the following distance control function is active. That is, the road surface image M3 and the partial images M5 are displayed in the same color when the lane centering assist function and the following distance control function are active.

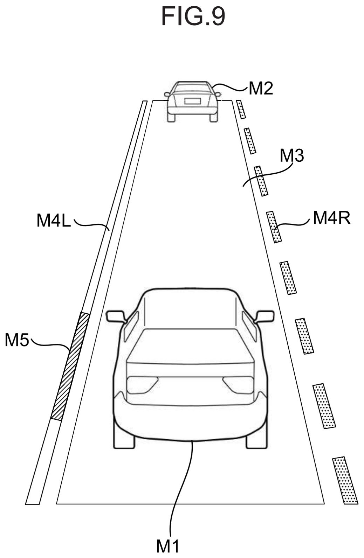

It will be noted that, as shown in FIG. 9, the display control section 64 may also perform control to color and display the color of the boundary line images M4 in accordance with the types of the boundary lines perceived by the perception section 62. FIG. 9 shows an example of a display screen when the lane centering assist function is active, the following distance control function is not active, the type of the boundary line at the left side of the vehicle 12 is a solid white line, and the type of the boundary line at the right side of the vehicle 12 is a dashed yellow line. In FIG. 9, a boundary line image M4R located on the right side of the vehicle 12 is colored in yellow. Furthermore, as shown in FIG. 9, the display control section 64 may perform control to color and display the partial image M5 of either one of left and right boundary line images M4L and M4R in the second color when the lane centering assist function is active. In FIG. 9, the partial image M5 of the left boundary line image M4L is colored in the second color.

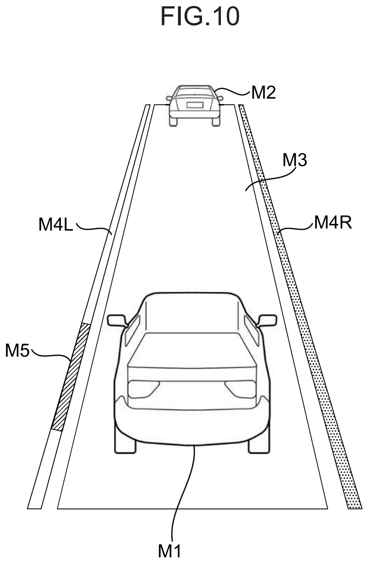

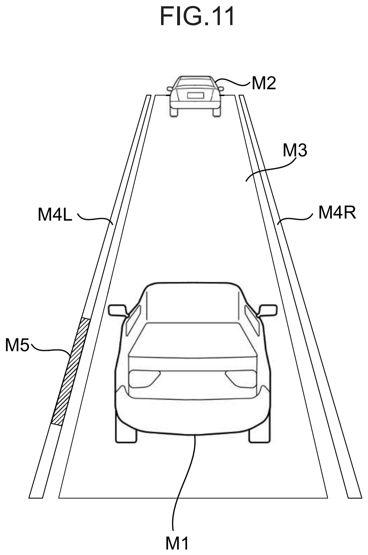

Furthermore, as shown in FIG. 10 and FIG. 11, the display control section 64 may perform control to change and display the display mode of the partial image M5 of the boundary line that borders an adjacent lane adjacent to the driving lane and to which the vehicle 12 can change lanes out of the boundary lines positioned on the left and right sides of the vehicle 12. FIG. 10 shows an example of a display screen when the lane centering assist function is active, the following distance control function is not active, the type of boundary line on the left side of the vehicle 12 is a solid white line, and the type of boundary line on the right side of the vehicle 12 is a solid yellow line. Furthermore, FIG. 10 shows an example of a display screen when the vehicle 12 can change lanes to the adjacent lane at the left side but cannot change lanes to the adjacent lane at the right side. In FIG. 10, the partial image M5 of the boundary line image M4L that borders the adjacent lane at the left side to which the vehicle 12 can change lanes is colored in the second color.

FIG. 11 shows an example of a display screen when the lane centering assist function is active, the following distance control function is not active, the type of the boundary line on the left side of the vehicle 12 is a solid white line, and there is no adjacent lane at the right side of the vehicle 12. That is, in this case, the vehicle 12 cannot change lanes at the right side. In FIG. 11 also, the partial image M5 of the boundary line image M4L that borders the adjacent lane at the left side to which the vehicle 12 can change lanes is colored in the second color.

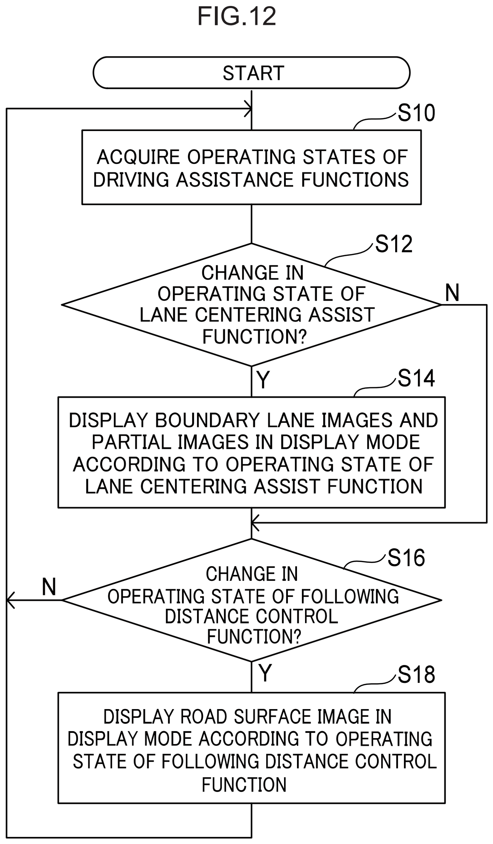

The action of the display control device 10 pertaining to this embodiment will now be described with reference to FIG. 12. The display control process shown in FIG. 12 is executed by the CPU 30 executing a program stored in the ROM 32 or the storage 36.

In step S10 of FIG. 12, the acquisition section 60 acquires the operating states of the driving assistance functions output from the autonomous driving ECU 40 and the types of the boundary lines. In step S12, the display control section 64 determines whether there is a change in the operating state of the lane centering assist function. When the determination is affirmative, the process proceeds to step S14. In step S14, the display control section 64 performs control to display the boundary line images M4 and the partial images M5 in a display mode according to the operating state of the lane centering assist function as mentioned above. At this time, the boundary line images M4 are displayed in a display mode according to the types of the boundary lines perceived by the perception section 62.

When the determination in step S12 is negative, the process proceeds to step S16 without step S14 being executed. That is, in this case, the colors of the boundary line images M4 and the partial images M5 displayed at the second display section 26 do not change.

In step S16, the display control section 64 determines whether there is a change in the operating state of the following distance control function. When the determination is affirmative, the process proceeds to step S18. In step S18, the display control section 64 performs control to display the road surface image M3 in a display mode according to the operating state of the following distance control function as mentioned above. When the process of step S18 ends, the process returns to step S10.

When the determination in step S16 is negative, the process returns to step S10 without the process of step S18 being executed. That is, in this case, the color of the road surface image M3 displayed at the second display section 26 does not change.

As described above, according to this embodiment, the display mode of the partial images located in positions determined as positions in the vicinity of the vehicle 12 out of the images of the boundary lines of the driving lane that is the lane in which the vehicle 12 is driving changes in accordance with the operating states of the driving assistance functions. Consequently, compared with a case where the display mode of the entireties of the boundary lines changes, it becomes easier for the occupant of the vehicle 12 to grasp the operating states of the driving assistance functions.

It will be noted that, although in the above embodiment, a case was described where the operating states of the driving assistance functions have two stages, active and not active, the technology of the present disclosure is not limited thereto. The operating states of the driving assistance functions may have three or more stages. Examples of three or more stages of operating states of the driving assistance functions include a state in which the function is not active, a state in which the function is on standby, a state in which the function is normally active, a state in which the function is normally active but is alerting the driver, a state in which the function is active but is not normal as a function, such as not being able to perceive the boundary lines, and a state in which the function is active but is temporarily stopped in response to a driving operation.

Furthermore, although in the above embodiment, a case was described where the display control section 64 performs control to display at the second display section 26 screens according to the operating states of the driving assistance functions of the vehicle 12, the technology of the present disclosure is not limited thereto. The display control section 64 may also perform control to display at the first display section 24 screens according to the operating states of the driving assistance functions of the vehicle 12 or perform control to display the screens on the first display section 24 and the second display section 26.

Furthermore, although in the above embodiment, a case was described where the display control section 64 changes the colors of the image of the road surface of the driving lane, the images of the boundary lines of the driving lane, and the partial images of the boundary lines as the display mode, the technology of the present disclosure is not limited thereto. The display control section 64 may also change hatchings in the images as the display mode. Furthermore, the display control section 64 may also change the intensities of the colors of the images as the display mode. Furthermore, the display control section 64 may also change the thicknesses of outlines of the images as the display mode. Furthermore, the display control section 64 may also change the types of outlines of the images as the display mode.

Furthermore, in the above embodiment, a lane departure prevention function that prevents the vehicle 12 from departing from the driving lane and a traffic jam assist function that assists in the driving of the vehicle 12 during a traffic jam may also be applied as the driving assistance functions.

Furthermore, the processes that the CPU implemented by reading software (programs) in the above embodiment may also be implemented by various types of processors other than a CPU. Examples of processors in this case include programmable logic devices (PLDs) whose circuit configuration can be changed after manufacture, such as field-programmable gate arrays (FPGAs), and dedicated electrical circuits that are processors having a circuit configuration dedicatedly designed for implementing specific processes, such as application-specific integrated circuits (ASICs). Furthermore, the processes may be implemented by one of these various types of processors or may be implemented by a combination of two or more processors of the same type or different types (e.g., plural FPGAs, and a combination of a CPU and an FPGA, etc.). Furthermore, the hardware structures of these various types of processors are more specifically electrical circuits in which circuit elements such as semiconductor elements are combined.

Furthermore, in the above embodiment, the ECU 28 had a configuration where it stores various types of data in the ROM or the storage, but it is not limited to this. For example, a recording medium such as a compact disc (CD), a digital versatile disc (DVD), and a universal serial bus (USB) memory may also serve as a storage section. In this case, various types of programs and data become stored in these recording media.

Furthermore, the program of this disclosure can be provided as a program product. The program product includes any type of product for providing the program. For example, the program product includes the program provided through a network such as the internet and a non-transitory computer-readable recording medium such as a CD-ROM or DVD in which the program is stored.

The vehicle 12 pertaining to the embodiment has been described above, but the present disclosure can of course be implemented in a variety of ways without departing from the scope of the claims.

## Claims

1. A display control device (10) comprising:
a display control section (64) that is configured to, in accordance with an operating state of a driving assistance function installed in a vehicle, perform control to change and display, at a display section (24,26), a display mode of partial images of images of boundary lines, the partial images located in positions determined as positions in the vicinity of the vehicle out of the images of boundary lines of a driving lane that is a lane in which the vehicle is driving.

2. The display control device of claim 1, wherein the display control section (64) is configured to perform, as the control to change and display the display mode, control to change and display colors of the partial images.

3. The display control device of claim 2, wherein the display control section (64) is configured to perform control to display regions corresponding to the partial images, in a color according to the operating mode.

4. The display control device of claim 2 or claim 3, wherein the display control section (64) is configured to:
perform control to change and display the colors of the partial images in accordance with an operating state of a first driving assistance function,
perform control to change and display a color of an image of the driving lane in accordance with an operating state of a second driving assistance function, and
perform control to display the partial images and the image of the driving lane in the same color when the first driving assistance function and the second driving assistance function are active.

5. The display control device of claim 2 or claim 3, further including a perception section (62) that is configured to perceive the boundary lines,
wherein the display control section (64) is configured to perform control to change and display a display mode of the boundary lines in accordance with the types of the boundary lines perceived by the perception section, and
perform control to change and display the color of the partial images in accordance with the operating state.

6. The display control device of any one of claim 1 to claim 3, wherein the display control section is configured to perform control to change and display a display mode of the partial image of the boundary line that borders an adjacent lane adjacent to the driving lane and to which the vehicle can change lanes, out of the boundary lines positioned at left and right sides of the vehicle.

7. A display control method in which a computer executes a process that, in accordance with an operating state of a driving assistance function installed in a vehicle, performs control to change and display, at a display section, a display mode of partial images of images of boundary lines, the partial images located in positions determined as positions in the vicinity of the vehicle out of the images of boundary lines of a driving lane that is a lane in which the vehicle is driving.

8. A computer-readable medium storing a display control program for causing a computer to execute a process that, in accordance with an operating state of a driving assistance function installed in a vehicle, performs control to change and display, at a display section, a display mode of partial images of images of boundary lines, the partial images located in positions determined as positions in the vicinity of the vehicle out of the images of boundary lines of a driving lane that is a lane in which the vehicle is driving.
